# Europäisches Patentamt
# European Patent Office
# Office européen des brevets

(19)

(11) Veröffentlichungsnummer : **0 140 357 B2**

(12) ## NEUE EUROPÄISCHE PATENTSCHRIFT

(45) Veröffentlichungstag der neuen Patentschrift :
**18.11.93 Patentblatt 93/46**

(51) Int. Cl.$^5$ : **C09D 159/00**

(21) Anmeldenummer : **84112970.3**

(22) Anmeldetag : **27.10.84**

(54) **Wärmehärtbare Beschichtungsmasse, darin enthaltene Prekondensate und deren Verwendung.**

Die Akte enthält technische Angaben, die nach dem Eingang der Anmeldung eingereicht wurden und die nicht in dieser Patentschrift enthalten sind.

(30) Priorität : **29.10.83 DE 3339424**

(43) Veröffentlichungstag der Anmeldung :
**08.05.85 Patentblatt 85/19**

(45) Bekanntmachung des Hinweises auf die Patenterteilung :
**28.03.90 Patentblatt 90/13**

(45) Bekanntmachung des Hinweises auf die Entscheidung über den Einspruch :
**18.11.93 Patentblatt 93/46**

(84) Benannte Vertragsstaaten :
**AT BE CH DE FR GB IT LI NL SE**

(56) Entgegenhaltungen :
**DE-A- 2 417 587**
**FR-A- 1 533 897**

(56) Entgegenhaltungen :
**FR-A- 1 574 971**
**JP-A- 5 874 740**
**US-A- 3 200 099**
**US-A- 3 925 278**
**US-A- 4 154 912**

(73) Patentinhaber : **Herberts Gesellschaft mit beschränkter Haftung**
**Christbusch 25**
**D-42285 Wuppertal (DE)**

(72) Erfinder : **Heinrich, Siegfried**
**Augustastrasse 84**
**D-5600 Wuppertal 1 (DE)**
Erfinder : **Heitzmann, Rudolf, Dr. Dipl.-Chem.**
**Waldstrasse 7**
**D-7803 Gundelfingen (DE)**
Erfinder : **Stolzenbach, Heinrich, Dr. Dipl.-Chem.**
**Kottsiepen 73**
**D-5600 Wuppertal 21 (DE)**

(74) Vertreter : **Türk, Gille, Hrabal, Leifert**
**Brucknerstrasse 20**
**D-40593 Düsseldorf (DE)**

**Beschreibung**

Die Erfindung betrifft eine wärmehärtbare Beschichtungsmasse enthaltend als Bindemittel (A) filmbildende hydroxylgruppenhaltige Verbindungen mit einer Hydroxylfunktionalität von mindestens 3 und einem mitteleren Molekulargewicht von 500 bis 90 000 und damit zu in der Beschichtungsmasse in gelöster Form vorliegenden Prekondensaten umgesetzte (B) vernetzende organische Verbindungen sowie organische Lösemittel, Additive und gegebenenfalls Pigmente und/oder Füllstoffe.

Derartige Beschichtungsmassen mit verschiedenen Vernetzungsmitteln sind bekannt. Als Vernetzungsmittel werden nach dem Stand der Technik eingesetzt Phenolharze, Aminharze oder Polyisocyanate. Obwohl derartige Beschichtungsmassen in großem Umfang technisch eingesetzt werden, besitzen sie schwerwiegende Nachteile. Phenolharze sind zwar billig und ergeben Beschichtungen mit hoher Chemikalienbeständigkeit, sind aber aus arbeitshygienischen Gründen problematisch wegen der unerwünschten Formaldehyd-Abspaltung. Die Beschichtungen sind wenig witterungsbeständig und dann, wenn sie durch geeignete Auswahl der Komponenten eine hohe Härte besitzen, wenig elastisch.

Im wesentlichen das gleiche gilt für Beschichtungsmassen enthaltend Aminharze als Vernetzungskomponente, wobei deren Vorteil jedoch nicht in der Chemikalienbeständigkeit, sondern in der Witterungsbeständigkeit liegt. Die genannten Aminharze sind Prekondensate aus Melamin oder Harnstoff mit Formaldehyd und Alkoholen.

Die oben erwähnten Phenolharze und Aminharze enthalten im allgemeinen freien Formaldehyd, welcher bei üblicher Verarbeitung der diese enthaltende Beschichtungsmittel zu arbeitshygienischen Problemen führen kann (Einatmen von Spritznebeln, Hautkontakt usw.). Daneben enthalten diese Harze auch erhebliche Anteile chemisch gebundenen Formaldehyds, welcher bei erhöhter Temperatur, z.B. beim Einbrennvorgang, leicht abspaltbar ist und in die Luft gelangt Die Toxizität des Formaldehyds bei der Verwendung solcher Beschichtungsmassen ist in vielen Veröffentlichungen beschrieben, und es besteht ein außerordentliches Bedürfnis, Beschichtungsmassen zu finden, die diese Nachteile nicht aufweisen.

In großem Umfang eingesetzt werden auch Beschichtungsmassen aus hydroxylgruppenhaltigen Verbindungen und Polyisocyanaten als Vernetzem. Diese besitzen hohe Witterungsbeständigkeit und gute Elastizität bei hoher Härte. Ihr Nachteil liegt darin, daß die Polyisocyanate relativ schwer zugänglich und deshalb teuer sind. Die Polyisocyanat-Komponente verursacht ebenfalls arbeitshygienische Probleme, da eine Gefahr der Sensibilisierung der Personen besteht, insbesondere durch Inhalation von Isocyanaten in Form von Aerosolen (z.B. bei der Spritzapplikation). Auch dies ist auf dem Lackgebiet bekannt. Wenn blockierte Polyisocyanate eingesetzt werden, treten beim Einbrennvorgang hohe Abspaltverluste ein.

Eine andere Gruppe von großtechnisch eingesetzten Beschichtungsmassen sind Epoxidharze, die mit Aminen oder Säureanhydriden vernetzt werden. Epoxidharze können aufgrund der Herstellungsmethode geringe Mengen Epichlorhydrin enthalten, welches stark toxisch ist ($LD_{50}$ bei der Ratte oral: 50 mg/kg). Ferner kann der Umgang mit Epoxidverbindungen zu Sensibilisierungen der damit arbeitenden Personen führen. Ferner wird in Nature, London, 276, 391 (1978) die mutagene Wirkung aromatischer Epoxidharze im Ames-Test beschrieben.

Amine wirken stark schleimhautreizend, sind meist sehr geruchsintensiv und somit arbeitshygienisch problematisch. Auch sie können sensibilisierend wirkend. Die als Vernetzer ebenfalls verwendeten Säureanhydride, z.B. Pyromellithsäuredianhydrid, wirken ebenfalls sensibilisierend und stark schleimhautreizend.

In der JP-A 58-74740 wird eine Harzzusammensetzung aus einem Phenolharz und einem Polyvinylacetal beschrieben, wobei das Phenolharz in eine Lösung des Acetals unter einer Temperatur von 40°C zugegeben wird, damit keine vorzeitige Vernetzung stattfindet. In der US-A-3 200 099 werden Harzsysteme aus Hydroxyalkylacrylat-Polymeren und Acetalen von Monoalkoholen als potentiellen Vernetzungsmitteln in einem organischen Lösungsmittel beschrieben. Das Acetal kann in situ hergestellt werden, wobei der Alkohol und der Aldehyd in eine Lösung des OH-haltigen Polymers eingegeben und zwischen 50 und 130°C erhitzt werden; das abgespaltene Wasser kann durch azeotrope Destillation abgeführt werden.

Der vorliegenden Erfindung liegt die Aufgabenstellung zugrunde wärmehärtbare Beschichtungsmassen und darin enthaltene Bindemittel zu finden, die aus arbeitshygienischen Gründen weniger bedenklich sind, jedoch überzüge ergeben, deren Eigenschaften mit denjenigen vergleichbar sind, die mit den bekannten Beschichtungsmassen erhalten werden.

Es wurde überraschenderweise gefunden, daß diese Aufgabenstellung dadurch gelöst werden kann, daß als Komponente für die Bindemittel bestimmte Umsetzungsprodukte von Aldehyden mit Alkoholen eingesetzt werden.

Gegenstand der Erfindung ist demgemäß eine wärmehärtbare Beschichtungsmasse enthaltend als Bindemittel (A) filmbildene hydroxylgruppenhaltige Verbindungen mit einer Hydroxylfunktionalität von mindestens 3 und einem mittleren Molekulargewicht von 500 bis 90000 und damit zu in der Beschichtungsmasse in gelöster Form vorliegenden Prekondensaten umgesetzte (B) vernetzende organische Verbindungen sowie organische Lösemittel, Additive und gegebenenfalls Pigmente und/oder Füllstoffe, die **dadurch gekennzeichnet** ist, daß die (B) vernetzenden organischen Verbindungen Umsetzungsprodukte sind von aromatischen oder aliphatischen Aldehyden mit zwei Aldehydgruppen pro Molekül und mit einem Molekulargewicht von höchstens 500 mit Mono- und gegebenenfalls Polyalkoholen und im Mittel 2 bis 10 Alkoxyendgruppen und ein mittleres Molekulargewicht von 75 bis 5000 aufweisen.

Das Verfahren zur Herstellung von filmbildenden in organischen Lösungsmitteln löslichen Prekondensaten aus (A) filmbildenden hydroxylgruppenhaltigen Verbindungen mit einer Hydroxylfunktionalität von mindestens 3 und einem mittleren Molekulargewicht von 500 bis 90000 und (B) vernetzenden organischen Verbindungen, ist dadurch gekennzeichnet, daß die (A) filmbildenden hydroxylgruppenhaltigen Verbindungen mit vernetzenden Umsetzungsprodukten aus aromatischen oder aliphatischen Aldehyden mit zwei Aldehydgruppen pro Molekül und mit einem Molekulargewicht von höchstens 500 mit Mono- und gegebenenfalls Polyalkoholen und im Mittel 2 bis 10 Alkoxyendgruppen und einem mittleren Molekulargewicht von 75 bis 5000 als Komponente (B) in organischen Lösungsmitteln bei Temperaturen von 100 bis 200°C in Gegenwart von Katalysatoren umgesetzt werden.

Gegenstand der Erfindung ist weiterhin die Verwendung der oben definierten wärmehärtbaren Beschichtungsmasse und der gemäß dem obigen Verfahren erhaltenen Prekondensate zur Herstellung von Lacküberzügen.

Als filmbildende hydroxylgruppenhaltige Verbindungen mit einer Hydroxylfunktionalität von mindestens 3 und einem mittleren Molekulargewicht von 500 bis 90000, d.h. als Komponente (A), werden gemäß der Erfindung bekannte derartige Verbindungen eingesetzt, wie sie auch zur Herstellung anderer bekannter Beschichtungsmassen verwendet werden.

Als hydroxylgruppenhaltige Verbindungen kommen neben den Polymerisatharzen wie Polyacrylatharzen auch Polykondensationsharze wie Polyester, Alkydharze, usw. und Polyadditionsharze wie Polyurethanharze in Betracht.

Als Polymerisatharze kommen im wesentlichen Polyacrylatharze mit einem Molekulargewicht bis zu etwa 90 000 zur Anwendung, welche bereits in zahlreichen Patentschriften wie DE-A-15 95 243, DE-A-20 54 231, DE-A-20 21 178, DE-A-26 03 259 beschrieben sind. Es handelt sich hierbei um Polymerisate von Acrylmonomeren wie (Meth-)Acrylsäure, Methyl(meth)acrylat, Hydroxyethyl(meth)acrylat, Styrol, Vinylverbindungen, wie sie auch im Wagner/Sarx, Lackkunstharze, 5. Auflage, Viertes Kapitel, Seite 229-238 beschrieben sind.

Als Polykondensationsharze kommen z.B. Polyester- und Alkydharze in Betracht. Polyesterharze sind Umsetzungsprodukte von aliphatischen, cycloaliphatischen und/oder aromatischen Mono- und/oder Polycarbonsäuren mit aliphatischen und/oder cydoaliphatischen Mono- und/oder Polyolen. Besonders bevorzugt sind Polyester bzw. Alkydharze mit einem Molekulargewicht von 500. bis 5 000, welche als Carbonsäurekomponente Verbindungen wie Adipinsäure, Benzoesäure, p-tert.-Butylbenzoesäure, Maleinsäure, Fumarsäure, o-, m-, p-Phthalsäure, Sebacinsäure, Tetrahydro-, Hexahydro-Phthalsäure, Trimellithsäure sowie aliphatische gesättigte und/oder ungesättigte Monocarbonsäuren mit einer Kohlenstoffzahl von 6 bis 20 und als Alkoholkomponente Verbindungen wie Ethylenglykol, Propylenglykol, Glyzerin, Pentaerythrit, Neopentylglykol, Trimethylolpropan, Hexandiol, Hydroxypivalinsäureneopentylglykolester, Diethylenglykol, Dipropylenglykol enthalten. Solche Polyester bzw. Alkydharze sind z.B. beschrieben in Houben-Weyl, Makromolekulare Stoffe II, Band 14/2, Seite 4-42 und in Ullmann, « Encyclopädie der technischen Chemie », 4. Auflage, Band 19, Seite 6186. Vorzugsweise kommen Polyester bzw. Alkydharze in Betracht, welche ein rechnerisches mittleres Molekulargewicht von 700 bis 4 000 besitzen.

Als Polyadditionsharze, zweckmäßig mit einem Molekulargewicht von 500 bis 5 000, werden solche verwendet, welche aus hydroxylgruppenhaltigen Polyethern, insbesondere Polypropylenglykolen, und/ oder Polyolen mit di- und/oder trifunktionellen Isocyanatharzen durch eine Polyadditionsreaktion hergestellt werden, wobei als H-active Substanz auch geringe Mengen von primären oder sekundären Aminen verwendet werden können und die entstehenden Reaktionsprodukte wiederum Hydroxylgruppen tragen. Besonders bevorzugt werden solche Polyadditionsharze verwendet, welche eine Hydroxylzahl von 50 bis 500 aufweisen.

Ferner konnen auch hydroxylgruppenhaltige Polyether, zweckmäßig mit einem Molekulargewicht von 500 bis 5000, abgeleitet z.B. von Ethylenglykol, Propandiol-1,2, Butandiol-1,4 zur Herstellung der filmbildenden, vernetzenden, organischen Verbindungen verwendet werden.

Die gemäß der Erfindung als Komponente (B) eingesetzten Urnsetzungsprodukte von Aldehyden mit Alkoholen sind ebenfalls bekannt, wurden aber bisher für diesen Zweck nicht eingesetzt.

Als Aldehyde kommen sowohl aromatische als auch aliphatische Aldehyde mit zwei Aldehydgruppen pro Molekül zur Anwendung. Beispiele hierfür sind Glyoxal, Glutardialdehyd und Malonaldehyd. Bevorzugt sind Malonaldehyd und Glutardialdehyd.

Als Alkohole kommen vorzugsweise einwertige Alkohole zur Anwendung, z. B. Methanol, Ethanol, n-Propanol, i-Propanol, n-Butanol, i-Butanol, sec.-Butanol, tert-Butanol. Bevorzugt sind Methanol und Ethanol.

Gegebenenfalls können auch mehrwertige Alkohole für die Umsetzung mit Aldehyden zur Anwendung kommen, z.B. Ethylenglykol, Propandiol-1,2, Hexandiol-1,6, Butandiol-1,4, Trimethylolpropan, Pentaerythrit, Glycerin.

Die oben beschriebenen Umsetzungsprodukte aus Aldehyden und Alkoholen werden mit hydroxylgruppenhaltigen Verbindungen mit einem Molekulargewicht von 500 bis 90 000 zur Herstellung der erfindungsgemäßen filmbildenden, vernetzenden, organischen Verbindungen soweit umgesetzt, daß noch in organischen Lösungsmitteln lösliche polymere Verbindungen entstehen. Dabei werden solche hydroxylgruppenhaltigen Verbindungen verwendet, welche pro Molekül mindestens 3 Hydroxylgruppen tragen.

Das Mengenverhältnis zwischen hydroxylgruppenhaltigen Verbindungen und den Umsetzungsprodukten von Aldehyden mit Alkoholen ist bevorzugt so zu wählen, daß auf ein Äquivalent Hydroxylgruppen mindestens 0.7 Äquivalente und höchstens 1.5 Äquivalente Alkoxyendgruppen fallen.

Besonders bevorzugt sind 0.8 bis 1.4 Äquivalente Alkoxyendgruppen des Umsetzungsproduktes von Aldehyden mit Alkoholen pro Äquivalent Hydroxylgruppen der hydroxylgruppenhaltigen Verbindungen.

Als organische Lösemittel werden übliche Lacklösemittel, zweckmäßig aromatische Kohlenwasserstoffe wie Xylol, Solvesso 100 (eingetragenes Warenzeichen), Glykolester wie Ethylglykolacetat, Alkohole wie Isopropanol, n-Butanol, Ether wie Ethylenglykoldimethylether oder andere organische Lösemittel eingesetzt, welche die filmbildenden, vernetzenden, organischen Verbindungen zu lösen vermögen, wobei auch Lösemittelgemische verwendet werden können.

Die Beschichtungsmasse gemäß der Erfindung enthält auf 100 Gew.-Teile Bindemittel etwa 10 bis 50 Gew.-Teile Lösemittel, vorzugsweise etwa 15 bis 40 Gew.-Teile Lösemittel.

Außerdem enthält die Beschichtungsmasse die üblichen Additive wie Siliconöle oder niedermolekulare Acrylpolymere (Verlaufsmittel), gegebenenfalls Pigmentbenetzungsmittel (z.B. Sojalecitin), Weichmacher z. B. Palatinol C (eingetragenes Warenzeichen), Epoxidharze, UV-Absorber, gegebenenfalls Füllstoffe z.B. Schwerspat, Kaolin, Talkum, gegebenenfalls Thixotropierungsmittel wie Aerosil, Bentone (beide eingetragene Warenzeichen), und Katalysatoren wie p-Toluolsulfonsäure.

Herstellung eines Polyesters als hydroxylgruppenhaltige Verbindung

536 g Trimethylolpropan werden mit 296 g Phthalsäureanhydrid und 146 g Adipinsäure in einem Vierhalskolben mit Kolonne, Abscheider, Kühler, Rührer und Inertgasleitung vermengt, etwa 50 ml Xylol als Schleppmittel zugegeben und zunächst auf 150°C aufgeheizt Danach wird so lange unter Erhöhung der Temperatur (bis 210°C) Wasser ausgekreist, bis die Säurezahl (SZ) des entstehenden Harzes unter 2 mg KOH/g gefallen ist. Das entstehende Harz wird abgekühlt und mit Ethylglykolacetat auf 60 % verdünnt. Errechnetes Molekulargewicht bei SZ2 ist 878, Hydroxylfunktionalität 5.8.

Herstellungsbeispiel 2 Herstellung eines Alkydharzes

Im wesentlichen unter gleichen Reaktionsbedingungen, wie im Herstellungsbeispiel 1 beschrieben, werden folgende Komponenten miteinander umgesetzt :

| 590 g | Trimethylolpropan |
|---|---|
| 340 g | Phthalsäureanhydrid |
| 169 g | Adipinsäure |
| 111 g | Isononansäure |
| 50 g | Xylol |

Errechnetes Molekulargewicht bei SZ2 ist 1128, Hydroxylfunktionalität 5.7.

Herstellungsbeispiel 3 Herstellung eines Acrylatharzes

In einen Rundkolben, ausgerüstet mit Rückflußkühler, Rührer, Inertgasleitung werden 47 g Ethylglykolacetat gegeben und zum Sieden erhitzt. Danach werden kontinuierlich innerhalb 4 h unter Beibehalten einer Temperatur von 153-156°C eine Mischung von

| 24,8 g | Hydroxyethylmethacrylat |
|---|---|
| 12,3 g | Butandiolacrylat |
| 3,0 g | Methylmethacrylat |
| 0,8 g | Acrylsäure |
| 6,2 g | Vinyltoluol |
| 2,3 g | tert.-Butylperbenzoat |

0,6 g     Ditertiärbutylperoxid

zugegeben. Danach wird mit 3 g Ethylglykolacetat nachgespült und etwa 4 h bei 150-154°C nachpolymerisiert. Durch Abdestillieren von Lösungsmittel wird die Harzkonzentration auf 60 % eingestellt.

Beispiel 1

1 000 g der Polyesterharzlösung von Herstellungsbeispiel 1 werden mit 0.17 g p-Toluolsulfonsäure versetzt und in einem Rundkolben, der mit Kolonne, Rührer, Inertgaseinleitung und Abscheider versehen ist, 30 min. auf 60 °C erwärmt. Danach werden 139.3 g Tetramethoxypropan und 33.7 g Trimethoxyethan zugegeben, und es wird langsam auf 100°C erhitzt. Nachdem 25% der theoretischen Methanolmenge abgeschieden sind, werden unter Kühlen 0.22 g Triethylamin zugegeben. Man erhält eine klare Harzlösung mit einer Viskosität von etwa 1 300 mPas und einem Gehalt an nichtflüchtigen Anteilen von 65 Gew.-%.

Zur Herstellung eines Lackes wird dieses Bindemittel mit den in der Tabelle 1 genannten Komponenten in üblicher Weise verarbeitet. Dabei wurde die Dispergierung bei Temperaturen von maximal 60 °C mit den Bestandteilen 1 bis 7 durchgeführt und das Material anschließend mit den Bestandteilen 8 und 9 vermischt. Danach wurde mit einem Lösungsmittelgemisch, bestehend aus gleichen Gewichtsteilen Solvesso 100 (eingetragenes Warenzeichen), Ethylglykolacetat und Butylglykolacetat auf eine Auslaufviskosität im AK 4-Becher bei 23 °C von 80 s eingestellt, 9 Gew.-% n-Butanol, bezogen auf 100%iges Bindemittel, zugegeben und weiter mit dem oben beschriebenen Lösungsmittelgemisch auf AK 4-Viskosität (23 °C) von 30 s eingestellt. Das Gewichtsverhältnis von Bindemittel zu Pigment ist bei allen Lacken 1 : 1.

Zur Bestimmung der lacktechnischen Eigenschaften wurden die Lacke auf phosphatierte, elektrotauchlackierte Prüfbleche appliziert (kann z. B. durch Spritzen, Rakeln, Gießen oder Tauchen geschehen) und während 25 Minuten bei 140°C in einem Umluftofen gehärtet. Die Prüfergebnisse sind in Tabelle 2 aufgeführt.

Für die Bestimmung der MEK (Methylethylketon)-Beständigkeit wurden die Lacke auf 2 mm dicke Glasplatten in der Weise appliziert und während 25 min. bei 140 °C getrocknet, daß eine Trockenfilmdicke von 30 μm erreicht wurde. Die beschichteten Platten wurden während 5 min. in ein auf 22 °C temperiertes MEK-Bad getaucht und sofort nach dem Herausnehmen und Abdunsten des Lösungsmittels bezüglich Blasengröße und -häufigkeit beurteilt.

Die Wasserlagerung wurde in der Weise durchgeführt, daß die beschichteten Prüfbleche während 16 h in 80 °C-warmem, deionisiertem Wasser gelagert und 1 h nach Entnahme aus dem Wasserbad beurteilt wurden.

Die Lacke des Beispiels 2 und des Vergleichsbeispiels wurden auf Lagerstabilität geprüft, wobei die Lagertemperatur 23 °C betrug und während 10 Wochen die Auslaufviskosität AK 4 (23 °C) gemessen wurde. Die Ergebnisse sind in Tabelle 3 aufgeführt.

Beispiel 2

Das gemäß Herstellungsbeispiel 2 erhaltene Harz wird noch im Kolben unter Kühlen mit 638 g Ethylglykolacetat verdünnt. Darin werden 0.24 g p-Toluolsulfonsäure bei 60°C während 30 min. gelöst. Dann werden 197 g Tetramethoxypropan und 48 g Trimethoxyethan zugegeben und auf maximal 103°C erhitzt. Wenn die Lösung 5 000 mPas (bei 25 °C) erreicht hat, wird auf Raumtemperatur gekühlt. Danach werden 0.31 g Triethylamin zugegeben. Die Lösung hat einen Gehalt an nichtflüchtigen Anteilen von 65 Gew.-%.

Die Herstellung und Applikation des Lackes erfolgt wie in Beispiel 1 beschrieben. Die Ergebnisse sind in den Tabellen zusammengestellt.

Beispiel 3

Das gemäß Herstellungsbeispiel 3 erhaltene Acrylatharz wird wie im Beispiel 1 beschrieben zu einem Prekondensat gemäß der Erfindung umgesetzt, wobei die folgenden Produkte und Mengen eingesetzt werden:

1 000 g        Acrylatharz von Herstellungsbeispiel 3
97.2 g         Tetramethoxypropan
23.6 g         Trimethoxyethan
0.25 g         p-Toluolsulfonsäure
0.16 g         Triethylamin

Die Reaktion wird bei 137-140 °C durchgeführt, und es wird so lange kondensiert, bis 25 % der theoretischen Methanolmenge abgeschieden worden sind. Der Gehalt an nichtflüchtigen Anteilen in der Lösung beträgt 63,6 Gew.-%.

Tabelle 1

| Lackbestandteile | Bestand-teil Nr. | Beispiel 1 | Beispiel 2 | Beispiel 3 | Vergleichs-beispiel |
|---|---|---|---|---|---|
| Bindemittel von Beispiel 1 | 1 | 43.54 g | – | – | – |
| Bindemittel von Beispiel 2 | 2 | – | 43.54 g | – | – |
| Bindemittel von Beispiel 3 | 3 | – | – | 44.50 g | – |
| Desmophen RD 181 (75%ig in Xylol) | 4 | – | – | – | 26.44 g |
| Titandioxid RL 68 (Rhone Poulenc) | 5 | 28.30 g | 28.30 g | 28.30 g | 28.30 g |
| Siliconöl AR 200 (Wacker) (1%ig in Xylol) | 6 | 0.20 g | 0.20 g | 0.20 g | 0.20 g |
| Additol XL 460 (Hoechst) | 7 | 2.13 g | 2.13 g | 2.13 g | 2.13 g |
| Nacure 155 (King Ind.) | 8 | 0.65 g | 0.65 g | 0.65 g | – |
| Luwipal 012 (BASF) (62%ig) | 9 | – | – | – | 13.71 g |

Anmerkung : Desmophen, Additol, Nacure und Luwipal sind eingetragene Warenzeichen. Desmophen

RD 181 ist ein handelsüblicher hydroxylgruppenhaltiger Polyester. Siliconöl und Additol sind Verlaufsmittel. Nacure ist ein Katalysator auf Basis von aromatischen Sulfonsäuren. Luwipal ist ein Melaminharz.

EP 0 140 357 B2

Tabelle 2

| Prüfmethode/ Kennwerte | Beispiel 1 | Beispiel 2 | Beispiel 3 | Vergleichsbeispiel |
|---|---|---|---|---|
| Viskosität (AK 4/23°C) bei Applikation | 30 s | 30 s | 30 s | 30 s |
| Einbrennbedingung | 25min/140°C | 25min/140°C | 25min/140°C | 25min/140°C |
| Pendelhärte (König) bei 30 μm Trockenfilmdicke | 195 sec | 190 sec | 112 sec | 121 sec |
| Tiefung (Erichsen) bei 30 μm Trockenfilmdicke | 8.5 mm | 9.0 mm | 8.7 mm | 3.7 mm |
| MEK-Beständigkeit (5min/22°C) Blasenmenge* Blasengröße* | 1 1 | 1 1 | 1 1 | 1 1 |
| Wasserlagerung (16h 80°C) Blasenmenge* Blasengröße* | 2 1 | 2 1 | 2 1 | 2 1 |

* Bewertung nach DIN 53230

EP 0 140 357 B2

Tabelle 3

| Lagerzeit in Wochen | Viskosität AK 4 (23°C) | |
| --- | --- | --- |
| | Beispiel 2 | Vergleichsbeispiel |
| 0 | 30 | 30 |
| 1 | 35 | 37 |
| 3 | 44 | 47 |
| 5 | 48 | 52 |
| 10 | 56 | 60 |

**Patentansprüche**

1. Wärmehärtbare Beschichtungsmasse enthaltend als Bindemittel (A) filmbildene hydroxylgruppenhaltige Verbindungen mit einer Hydroxylfunktionalität von mindestens 3 und einem mittleren Molekulargewicht von 500 bis 90000 und damit zu in der Beschichtungsmasse in gelöster Form vorliegenden Prekondensaten umgesetzte (B) vernetzende organische Verbindungen sowie organische Lösemittel, Additive und gegebenenfalls Pigmente und/oder Füllstoffe, **dadurch gekennzeichnet,** daß die (B) vernetzenden organischen Verbindungen Umsetzungsprodukte sind von aromatischen oder aliphatischen Aldehyden mit zwei Aldehydgruppen pro Molekül und mit einem Molekulargewicht von höchstens 500 mit Mono- und gegebenenfalls Polyalkoholen und im Mittel 2 bis 10 Alkoxyendgruppen und ein mittleres Molekulargewicht von 75 bis 5000 aufweisen.

2. Beschichtungsmasse nach Anspruch 1, dadurch gekennzeichnet, daß die Komponente (B) Umsetzungsprodukte sind von Malonaldehyd mit Methanol und/oder Ethanol.

3. Beschichtungsmasse gemäß Anspruch 1, dadurch gekennzeichnet, daß die Komponente (B) Tetramethoxypropan und Trimethoxyethan ist.

4. Beschichtungsmasse nach einem oder mehreren der Ansprüche 1 bis 3, dadurch gekennzeichnet, daß auf ein Äquivalent Hydroxylgruppen der Komponente (A) 0.7 bis 1.5 Äquivalente Alkoxyendgruppen der Komponente (B) entfallen.

5. Beschichtungsmasse nach Anspruch 4, dadurch gekennzeichnet, daß auf ein Äquivalent Hydroxylgruppen der Komponente (A) 0.8 bis 1.4 Äquivalente Alkoxyendgruppen der Komponente (B) entfallen.

6. Verfahren zur Herstellung von filmbildenden in organischen Lösungsmitteln löslichen Prekondensaten aus (A) filmbildenden hydroxylgruppenhaltigen Verbindungen mit einer Hydroxylfunktionalität von mindestens 3 und einem mittleren Molekulargewicht von 500 bis 90000 und (B) vernetzenden organischen Verbindungen, dadurch gekennzeichnet, daß die (A) filmbildenden hydroxylgruppenhaltigen Verbindungen mit vernetzenden Umsetzungsprodukten aus aromatischen oder aliphatischen Aldehyden mit zwei Aldehydgruppen pro Molekül und mit einem Molekulargewicht von höchstens 500 mit Mono- und gegebenenfalls Polyalkoholen und im Mittel 2 bis 10 Alkoxyendgruppen und einem mittleren Molekulargewicht von 75 bis 5000 als Komponente (B) in organischen Lösungsmitteln bei Temperaturen von 100 bis 200°C in Gegenwart von Katalysatoren umgesetzt werden.

7. Verfahren nach Anspruch 6, dadurch gekennzeichnet, daß als Komponente (8) das Umsetzungsprodukt von Malonaldehyd mit Methanol und/oder Ethanol verwendet wird.

8. Verfahren nach Anspruch 6, dadurch gekennzeichnet, daß als Komponente (B) Tetramethoxypropan und Trimethoxyethan verwendet wird.

9. Verfahren nach einem oder mehreren der Ansprüche 6 bis 8, dadurch gekennzeichnet, daß solche Mengen der Komponente (A) mit der Komponente (8) umgesetzt werden, daß auf ein Äquivalent Hydroxylgruppen der Komponente (A) 0.7 bis 1.5 Äquivalente Alkoxyendgruppen der Komponente (B) entfallen.

10. Verwendung nach Anspruch 9, dadurch gekennzeichnet, daß solche Mengen der Komponente (A) mit der Komponente (B) umgesetzt werden, daß auf ein Äquivalent Hydroxylgruppen der Komponente (A) 0.8 bis 1.4 Äquivalente Alkoxyendgruppen der Komponente (B) entfallen.

11. Verwendung der wärmehärtbaren Beschichtungsmasse nach Anspruch 1 zur Herstellung von Lacküberzügen.

12. Verwendung des nach Anspruch 6 erhältlichen Prekondensats als Bindemittel in wärmehärtbaren Beschichtungsmassen zur Herstellung von Lacküberzügen.

## Claims

1. Heat-curable coating composition containing as binder (A) film-forming hydroxyl group-containing compounds having a hydroxyl functionality of at least 3 and an average molecular weight of 500 to 90,000 and (B) crosslinking organic compounds reacted with it to give precondensates present in dissolved form in the coating composition, and organic solvents, additives and optionally pigments and/or fillers, characterised in that the crosslinking organic compounds (B) are reaction products of aromatic or aliphatic aldehydes with two aldehyde groups per molecule and having a molecular weight of 500 at the most, and monoalcohols and optionally polyalcohols, and have on average 2 to 10 alkoxy end groups and an average molecular weight of 75 to 5,000.

2. Coating composition according to claim 1, characterised in that components (B) are reaction products of malonaldehyde with methanol and/or ethanol.

3. Coating composition according to claim 1, characterised in that component (B) is tetramethoxypropane and trimethoxyethane.

4. Coating composition according to one or more of claims 1 to 3, characterised in that 0.7 to 1.5 equivalents of alkoxy end groups of component (B) are used for one equivalent of hydroxyl groups of component (A).

5. Coating composition according to claim 4, characterised in that 0.8 to 1.4 equivalents of alkoxy end groups of component (B) are used for one equivalent of hydroxyl groups of component (A).

6. Process for the preparation of film-forming precondensates soluble in organic solvents from (A) film-forming hydroxyl group-containing compounds having a hydroxyl functionality of at least 3 and an average molecular weight of 500 to 90,000 and (B) crosslinking organic compounds, characterised in that the (A) film-forming hydroxyl group-containing compounds are reacted with crosslinking reaction products of aromatic or aliphatic aldehydes with two aldehyde groups per molecule and having a molecular weight of 500 at the most, and monoalcohols and optionally polyalcohols, and having on average 2 to 10 alkoxy end groups and an average molecular weight of 75 to 5,000, as component (B), in organic solvents at temperatures of 100 to 200°C in the presence of catalysts.

7. Process according to claim 6, characterised in that the reaction product of malonaldehyde with methanol and/or ethanol is used as component (B).

8. Process according to claim 6, characterised in that tetramethoxypropane and trimethoxyethane is used as component (B).

9. Process according to one or more of claims 5 to 8, characterised in that amounts of component (A) are reacted with component (B) such that 0.7 to 1.5 equivalents of alkoxy end groups of component (B) are used for one equivalent of hydroxyl groups of component (A).

10. Process according to claim 9, characterised in that amounts of component (A) are reacted with component (B) such that 0.8 to 1.4 equivalents of alkoxy end groups of component (B) are used for one equivalent of hydroxyl groups of component (A).

11. Use of heat-curable coating composition according to claim 1 for the preparation of lacquer coatings.

**12.** Use of the precondensate which can be obtained according to claim 6 as binder in heat-curable coating compositions for the preparation of lacquer coatings.

**Revendications**

**1.** Masse pour un revêtement durcissable à la chaleur comprenant comme liant (A) des composés filmogènes comprenant des groupes hydroxyles avec une fonctionnalité hydroxyle d'au moins 3 et un poids moléculaire moyen de 500 à 90 000 et des composés organiques durcisseurs (B) ayant réagi pour donner des précondensats sous forme dissoute, ainsi que des solvants organiques, des additifs et le cas échéant des pigments et/ou des charges, caractérisée en ce que les composés organiques durcisseurs sont des produits de réaction d'aldéhydes aromatiques ou aliphatiques ayant deux groupes aldéhydes par molécule et ayant un poids moléculaire de 500 au plus avec des monoalcools et le cas échéant des polyalcools et qui présentent en moyenne de 2 à 10 groupes alcoxy terminaux et un poids moléculaire moyen de 75 à 5000.

**2.** Masse de revêtement selon la revendication 1, caractérisée en ce que le composant (B) est constitué des produits de réaction de l'aldéhyde malonique avec du méthanol et/ou de l'éthanol.

**3.** Masse de revêtement selon la revendication 1, caractérisée en ce que le composant (B) est le tétraméthoxypropane et le triméthoxyéthane.

**4.** Masse de revêtement selon l'une ou plusieurs des revendications 1 à 3, caractérisée en ce que pour un équivalent de groupes hydroxyles de composant (A) il y a 0,7 à 1,5 équivalent de groupes alcoxy terminaux de composant (B).

**5.** Masse de revêtement selon la revendication 4, caractérisée en ce que pour un équivalent de groupes hydroxyles de composant (A) il y a 0,8 à 1,4 équivalent de groupes alcoxy terminaux de composant (B).

**6.** Procédé de préparation de précondensats filmogènes solubles dans des solvants organiques à partir de composé filmogène (A) comprenant des groupes hydroxyles avec une fonctionnalité hydroxyle d'au moins 3 et un poids moléculaire moyen de 500 à 90 000 et de composés organiques durcisseurs (B), caractérisé en ce qu'on fait réagir les composés filmogènes (A) comprenant des groupes hydroxyles avec des produits durcisseurs obtenus par réaction d'aldéhydes aromatiques ou aliphatiques ayant deux groupes aldéhydes par molécule et ayant un poids moléculaire de 500 au plus avec des monoalcools et le cas échéant des polyalcools, présentant en moyenne de 2 à 10 groupes alcoxy terminaux et un poids moléculaire moyen de 75 à 5000 comme composant (B) dans des solvants organiques à des températures comprises entre 100 et 200°C en présence de catalyseurs.

**7.** Procédé selon la revendication 6, caractérisé en ce que comme composant (B) on utilise le produit de réaction de l'aldéhyde malonique avec le méthanol et/ou l'éthanol.

**8.** Procédé selon la revendication 6, caractérisé en ce que comme composant (B) on utilise le tétraméthoxypropane et le triméthoxyéthane.

**9.** Procédé selon l'une ou plusieurs des revendications 6 à 8, caractérisé en ce qu'on fait réagir des quantités de composant (A) avec des quantités de composant (B) telles que pour un équivalent de groupes hyroxyles du composant (A) il y ait 0,7 à 1,5 équivalent de groupes alcoxy terminaux de composant (B).

**10.** Procédé selon la revendication 9, caractérisé en ce qu'on fait réagir des quantités de composant (A) avec des quantités de composant (B) telles que pour un équivalent de groupes hydroxyles du composant (A) il y ait 0,8 à 1,4 équivalent de groupes alcoxy de composant (B).

**11.** Utilisation de masse de revêtement selon la revendication 1 pour préparer des revêtements de peinture.

**12.** Utilisation du précondensat obtenu selon la revendication 6 comme liant de masses de revêtement durcissables à la chaleur pour préparer des revêtements de peinture.